# EUROPEAN PATENT SPECIFICATION

(11) **EP 3 212 011 B1**
(45) Date of publication and mention of the grant of the patent: **13.06.2018**
(21) Application number: 15777922.4
(22) Date of filing: 06.10.2015
(51) Int. Cl.: A23L 23/10, A23L 29/20

(54) **FOOD CONCENTRATE**
LEBENSMITTELKONZENTRAT
CONCENTRÉ ALIMENTAIRE

(30) Priority: 29.10.2014 EP 14190875
(43) Date of publication of application: 06.09.2017
(73) Proprietor: Unilever N.V., 3013 AL Rotterdam (NL); Unilever PLC, London, Greater London EC4Y 0DY (GB)
(72) Inventor: BLIJDENSTEIN, Theodorus, Berend, Jan, NL-3133 AT Vlaardingen (NL); PAUNOV, Vesselin, Nikolaev, Hull HU6 7RX (GB); RUTKEVICIUS, Marius, Raleigh, North Carolina 27606-1992 (US); STOYANOV, Simeon,Dobrev, NL-3133 AT Vlaardingen (NL)
(74) Representative: Tjon, Hon Kong Guno
(86) International application number: PCT/EP2015/073052
(87) International publication number: WO 2016/066383

(56) References cited:
- WO-A1-2013/064449
- WO-A2-2014/095196

## Description

### Field of the invention

The present invention relates to a food concentrate comprising a solid phase and a gel phase; in particular the invention relates to a food concentrate with gel particles embedded in the solid matrix. The invention further relates to a method for preparing such compositions, and to use of the compositions.

### Background of the invention

High-salt concentrate food compositions which after dilution in water or a dish result in a bouillon, a soup, a sauce, a gravy or a seasoned dish have been described in the art. This class of products is known to the consumer as well as to the skilled person for many decades. They are known for example in the form of dry bouillon cubes or soup cubes or seasoning cubes. Concentrated products can be dry (e.g. dehydrated), liquid, semi-liquid or paste-like products which, after the addition to water according to the directions for use, yield ready to eat preparations.

Recently, savoury concentrate food compositions became available which are in the form of a semi-solid gel. Compared to traditional dry concentrates like bouillon cubes, these gelled concentrates can contain more water and are considered to have a more fresh appearance. Consumers like that a product "sets back" once pressed, showing elasticity, like a gel. This is often associated with fresh food of high quality (e.g. fresh fish, liver, meat), whereas a hard or pasty texture may be associated with non-fresh products that might have dried out. Compared to liquid concentrates, the gelled concentrates show the advantage that they are semi-solid, and sufficiently firm (also referred to in the art as self-sustaining, shape stable, soft-solid or semi-solid), and non-sticky and therefore can be unit dosed, like a traditional bouillon cube.

Savoury concentrates usually contain relatively high amounts of water and salt. The salt is added for taste reasons, but contributes to the microbiological stability of the gelled savoury concentrate as well. A drawback of gelled food concentrates is that gelling systems are typically less effective at high salt concentrations. Additionally there is a solubility limit of salt in gel systems, simply because there is a maximum solubility of salt in water that is further reduced when there are other ingredients dissolved in the gel as well.

Gelled savoury concentrates rely on the presence of a gelling agent for their firm, semi-solid, gelled texture. A gelling agent may comprise one or more gelling and/or thickening agents which on their own or together provide the firm semi-solid gel texture. For the application in high-salt food concentrates, the gelling agent should be compatible with high-salt levels. Most gelling agents that can form semi-solid gelled, ready to eat (low-salt levels) food products, appeared not compatible with the relatively high-salt levels, such as common in savoury food concentrates. At these high-salt levels many gelling agents appeared to behave very different than they do at low-salt levels. In a high-salt environment they might lose their texturing ability, or often do not form a gel at all, or show other significant disadvantages which make production of savoury high-salt gels at industrial scale far from attractive, if not impossible.

To achieve a gel structure using gelling agents that show sensitivity to high-salt conditions, the easiest solution would be to increase the gelling agent concentration. However, as a consequence of an increased gelling agent concentration other issues may appear. For some gelling agents, increasing their concentration to allow incorporation of creamy ingredients would cause processing problems due to a too high viscosity during processing. Also when the price of the gelling raw material is high, an increase of gelling agent concentration to sufficient level to counteract high-salt sensitivity or to incorporate creamy ingredients may lead to unaffordable recipe costs.

However, there the dosage of solid taste ingredients, especially salt, leaves to be desired.

WO2014/095196 discloses a solid or semi solid food concentrate comprising edible fat and salt, comprising pores, wherein the pores are coated with dried a hydrocolloid; and and a process for making the same. However, the water activity of such a product is too low for easy dissolution of the concentrate; and the fresh appearance is lost due to extensive drying.

It is an object of the invention to provide a food concentrate that combines the benefits of solid food concentrates and gelled, pasty or liquid concentrates or stock products.

It is a further object of the invention to provide a food concentrate that is dissolving fast in hot water.

It is a further object of the invention to provide a food concentrate that is easy to crumble.

It is yet a further object of the invention that fresh ingredients may be incorporated in the gel phase, giving a fresh appearance.

Surprisingly it is found that a food concentrate comprising gel particles embedded in a solid matrix provides a good strength of the concentrate, a fresh appearance due to the gel particles and fast dissolution due to the hybrid structure of solid and gel phases in a single concentrate.

### Summary of the invention

Accordingly, in a first aspect the invention provides a food concentrate comprising: 65-92.5% by volume of the total concentrate of a solid matrix; and 7.5-35% by volume of the total concentrate of a gel phase; characterised in that: the gel phase is in the form of particles embedded into the solid matrix, wherein the gel particles have an average particle size of 200-5000 µm, the water activity of the food concentrate is between 0.55 and 0.75 and the food concentrate having a hardness of less than 350kPa

In a second aspect, the invention provides a method for preparation of a composition according to the invention, comprising the following steps: preparing the solid matrix by mixing the ingredients of the solid matrix, preparing the gel phase by mixing one or more gelling agents with water or liquid water based taste imparting ingredients and salt, comminuting the gel particles to a size of 50 micrometer to 5 millimeter, mixing the gel particles with the solid matrix, and extruding or pressing the food concentrate into cubes or tablets.

In a third aspect, the invention provides the use of a composition according to the invention as a bouillon cube.

For the avoidance of doubt, by solid matrix is meant, shape stable, and having a hardness of at least 350kPa as measured by the method given herein below, wherein the hardness is defined as the compressive pressure, exerted on a food concentrate, which is required to break the structure of the concentrate.

These and other aspects, features and advantages will become apparent to those of ordinary skill in the art from a reading of the following detailed description and the appended claims. For the avoidance of doubt, any feature of one aspect of the present invention may be utilised in any other aspect of the invention. The word "comprising" is intended to mean "including" but not necessarily "consisting of" or "composed of." In other words, the listed steps or options need not be exhaustive. It is noted that the examples given in the description below are intended to clarify the invention and are not intended to limit the invention to those examples per se. Similarly, all percentages are weight/weight percentages unless otherwise indicated. Except in the operating and comparative examples, or where otherwise explicitly indicated, all numbers in this description indicating amounts of material or conditions of reaction, physical properties of materials and/or use are to be understood as modified by the word "about". Numerical ranges expressed in the format "from x to y" are understood to include x and y. When for a specific feature multiple preferred ranges are described in the format "from x to y", it is understood that all ranges combining the different endpoints are also contemplated.

### Detailed description of the invention

Accordingly the invention provides a food concentrate comprising a solid matrix; and a gel phase, characterized in that the gel phase is in the form of particles embedded into the solid matrix, wherein the gel particles have an average particle size of 200-5000 µm, the water activity of the food concentrate is between 0.55 and 0.75 and the food concentrate having a hardness of less than 350kPa.

### Water activity

The solid matrix preferably has a water activity (a_{w}) of 0.3 to 0.65, preferably 0.35 to 0.5.

The water activity a_{W} of the gel phase is preferably 0.4 to 0.98, more preferably 0.5-0.98, even more preferably 0.6-0.87, still more preferably 0.6-0.8 and most preferably 0.6-0.75.

The water activity of the food concentrate is between 0.55 and 0.75, more preferably of between 0.6 and 0.7, most preferably of between 0.6 and 0.65.

### Solid Matrix

The solid matrix is present in the food concentrate at a concentration of between 65 and 92.5% by volume.

The solid matrix preferably comprises common food concentrate ingredients.

### NaCl

The savoury character of the food concentrate is at least partly created by the presence of NaCl. The solid matrix of the concentrate of the invention therefore comprises NaCl, preferably in an amount of from 10 to 70 wt%, preferably of from 30 wt% to 70 wt%, more preferably of from 40 wt% to 65 wt%, even more preferably of from 45 wt% to 60 wt%, based on the weight of the food concentrate. It can be preferred that in addition to NaCl, optionally a potassium salt is present, like for example KCl, for example to replace part of the NaCl by potassium salt. Potassium salt, preferably KCl, can preferably be present in a ratio potassium salt, preferably KCl, to NaCl of from 1:10 to 1:1, preferably of from 1:10 to 1:2.

### Glutamate

The solid matrix in the food concentrate of the invention comprises glutamate. Preferably, the solid matrix in the food concentrate comprises a glutamate from the group consisting of mono sodium glutamate, potassium glutamate, glutamic acid and mixtures thereof. More preferably, glutamate comprises mono sodium glutamate. Glutamate is preferably present in the solid matrix in an amount of from 0 to 45 wt%, more preferably 0.5 to 40 wt%, more preferably in an amount of from 1 to 35 wt%, even more preferably in an amount of from 5 to 30 wt%, most preferably in an amount of from 7 to 20 wt%, based on the weight of the food concentrate. Preferably the solid matrix comprises monosodium glutamate.

### Binder

The solid matrix of the invention can comprise a binder, for example to maintain the desired texture and/or shape of the food concentrate. A binder is especially preferred when the food concentrate is in the form of a cube or tablet. Preferably, the binder comprises one selected from the group consisting of fat, polysaccharide, sugar, and mixtures thereof. Sugar preferably comprises monosaccharide. Polysaccharide preferably comprises starch, gums or mixtures thereof.

### Fat

The solid matrix of the invention preferably comprises fat. This is preferred especially when the food concentrate is a cube or tablet, such as a bouillon cube or tablet, a soup cube or tablet or a seasoning cube or tablet. Fat can function as a binder. Fat preferably comprises a fat selected from the group consisting of chicken fat, beef fat, vegetable fat, pork fat and mixtures thereof. Fat is preferably present in an amount of from 1 to 35 wt%, preferably of from 5 to 30 wt%, more preferably of from 10 to 20 wt%. Especially if the food concentrate is an extruded food concentrate, like for example an extruded cube or tablet, also known in the field as 'pasty' cube, the fat is preferably present in an amount of from 10 to 35 wt%, more preferably of from 15 to 30 wt%, most preferably of from 17 to 25 wt%. Especially if the food concentrate is a pressed cube or tablet or a roller-formed cube or tablet, the fat is preferably present in an amount of from 1 to 20 wt%, preferably of from 5 to 15 wt%, most preferably of from 7 to 12 wt%. However, it might be preferred that the solid matrix has a low fat level, for example of lower than 15 wt%, for example of between 0.1 and 15 wt%., more preferably of lower than 10 wt%, for example of between 0.1 and 10 wt%., even more preferably lower than 5 wt, for example of between 0.1 and 5 wt%, or lower than 2 wt% for example of between 0.1 and 2 wt%, or even lower than 1 wt%., for example of between 0.1 and 1 wt%. These low fat levels might be preferred for example in case of low-fat cubes or tablets or in case of water-based granules or powders, for example bouillon-, soup-, or seasoning granules or powder.

### Starch

The solid matrix may preferably comprise starch. Starch is preferably present in an amount of from 0.1 to 25 wt%, 2 to 15 wt%, more preferably of from 5 to 12 wt%, most preferably of from 7 to 10 wt% of the solid matrix. Starch can function as a filler. It may further contribute to the mouth feel of the food product resulting upon dilution of the food concentrate. Starch is preferably selected from the group consisting of corn starch, tapioca starch, pea starch, potato starch and mixtures thereof. The starch is preferably non-gelatinised starch. It might be preferred however, that starch comprises gelatinised starch, especially when the starch is used as a binder, a preferred amount of non-gelatinised starch, based on the weight of the solid matrix, can be of from 0.1 to 10 wt%.

### Water

The solid matrix of the food concentrate of the present invention is preferably a dry solid matrix. Although some water can be present in the solid matrix, it comprises preferably less than 10 wt% of total water, more preferably less than 5 wt%, for example from 1 to 10 wt% or from 2 to 5 wt% of total water, based on the weight of the solid matrix. Total water includes water which may be present in the other ingredients of the solid matrix.

As is commonly understood in the art, salts as described in the present document may, at least partly, dissolve in the food concentrate, especially when water is present. "Salt", like NaCl, glutamate, iron salt and phosphate salt includes the dissolved or partly dissolved or dissociated form of these respective salts. For example, the part of the total amount of added NaCl, which turns into the dissolved form in the solid matrix, contributes to the total amount of NaCl in the solid matrix.

### Taste imparting components

It can be preferred that the solid matrix comprises plant particles, for example particles from herbs or from vegetable. The plant particles are preferably present in an amount of from 0.1 wt% to 20 wt%, more preferably of from 0.5 wt% to 10 wt%, even more preferably of from 1 to 5 wt%, or they can be preferred to be present in an amount of from 0.5 to 2 wt% (dry weight of the plant particles based on weight of the solid matrix).

The solid matrix of the present invention preferably comprises flavours. Flavours can be present for example in an amount of for example 0.1 wt% to 10 wt%, more preferably of from 0.5 wt% to 8 wt%, (dry weight of the flavours based on weight of the solid matrix). Flavours are preferably selected from the group consisting of vegetable flavour, meat flavour and mixtures thereof. Meat flavour preferably comprises flavours selected from the group consisting of chicken flavour, fish flavour, beef flavour, pork flavour, lamb flavour, and mixtures thereof. Vegetable flavour preferably comprises spices.

The solid matrix might contain meat extract from for instance beef, chicken, pork, lamb, and other meat. The solid matrix may contain extract of yeast, alternatively to, or in addition to extract of meat. Extract of meat and extract of yeast can individually be present in an amount of from 1 to 10 wt%, preferably in an amount of from 2 to 7 wt%, based on the weight of the solid matrix. It can be preferred that the total amount of meat extract and yeast extract taken together is present in an amount of from 1 to 10 wt%, preferably in an amount of from 2 to 7 wt%, based on the weight of the solid matrix.

### Gel Phase

The gel phase of the concentrate preferably comprises:
- 0.1-10% by volume based on water in the gel phase of a salt tolerant gelling system;
- 5-30% by weight based on water in the gel phase of salt;
- 1-60% by weight of the gel phase of taste imparting components, wherein the taste-imparting components comprise one or more of liquid or dissolvable extracts or concentrates of one or more of meat, fish, herbs, fruit or vegetables, and/or flavours, and/or yeast extract, and/or hydrolysed protein of vegetable-, soy-, fish-, or meat origin and/or herbs, vegetables, fruits, meat, fish, crustaceans, or particulates thereof, said the particulates having an average particle size of 100 to 2000 µm. It may be preferred that the gel phase in the concentrate according to the present invention further comprises 0-40 % (by weight, based on total water content in the gel phase, preferably 1-40%, more preferably 3-30%) salt (preferably NaCl, but also including other salts, preferably in dissolved form).

The gelling system is preferably a salt toleration gelling system. Suitable salt tolerant hydrocolloids that may be used as gelling system include locust bean gum (LBG), xanthan, carrageenan, alginate, gellan, agar, guar gum, Konjac mannan, pectins, and starches. An example of a protein-based gelling agent is gelatin. The gelling system is present in the gel phase in a concentration of 0.1-10% by weight of the gel phase, preferably 0.25-7% even more preferably 0.5-5%, or even 1-4% by weight of the gel phase.

Preferably the hydrocolloid comprises a combination of at least two hydrocolloids. A preferred combination of hydrocolloids is xanthan gum and locust bean gum, preferably at a weight ratio ranging from 70:30 to 30:70, most preferred at a weight ratio of 70:30.

Another preferred combination of hydrocolloids is xanthan gum and tara gum, preferably at a weight ratio ranging from 80:20 to 20:80, preferably ranging from 70:30 to 30:70, preferably ranging from 60:40 to 40:60, preferably ranging from 55:45 to 45:55.

Another preferred combination of hydrocolloids is xanthan gum and guar gum, preferably at a weight ratio ranging from 80:20 to 20:80, preferably ranging from 70:30 to 30:70, preferably ranging from 60:40 to 40:60, preferably ranging from 55:45 to 45:55.

Another preferred combination of hydrocolloids is xanthan gum and cassia gum, preferably at a weight ratio ranging from 80:20 to 20:80, preferably ranging from 70:30 to 30:70, preferably ranging from 60:40 to 40:60, preferably ranging from 55:45 to 45:55.

Another preferred combination of hydrocolloids is xanthan gum and konjac gum , preferably at a weight ratio ranging from 85:15 to 15:85. Most preferably, the hydrocolloid comprises xanthan gum and konjac gum in a weight ratio ranging from 1.5:1 to 2.5:1.

The herbs, vegetables, meat, fish, crustaceans, or particulates thereof (including mixtures thereof) as applied in the current invention can be intermediate moisture components.

The texture or rheology desired for the product according to the invention is preferably that of a gel. Regarding a gel, in scientific literature, e.g. "Das Rheologie Handbuch, Thomas Mezger, Curt R. Vincentz-Verlag, Hannover, 2000" a gel is typically defined by its ratio of elastic modulus G' to viscous modulus G". This allows it to distinguish between a highly viscous fluid, e.g. a paste and an elastic system of same viscosity e.g. a jelly. This ratio should be greater than 1 for a gel. For the given product, a ratio of greater than 0.5 is suitable. It is preferred, however, that said ratio is greater than 1, more preferably it is greater than 5.

The absolute value of the viscous modus G" is preferably greater than 10 Pa, more preferred greater than 50 Pa. This criterion distinguishes between thin solutions with gel character and a more shape retaining jelly products that are the intended products according to this invention.

The above given values need should be measured under the following circumstances:
- a maturation time of at least 12 h, preferably at least 24 h or even at least 48 h under ambient conditions,
- measurement temperature of 25 °C,
- an oscillatory frequency of 1 rad/s and
- a strain of 1%.
This set of parameters refers to a standard oscillatory test conducted with a standard state of the art low deformation rheometer as commercially available from e.g. Bohlin or TA Instruments.

The requirements as stated herein for G' : G" should preferably apply to the whole concentrate, and not just for a part of it. For example, for a construction like in WO 01/72148 such may be true for the wall material, but not for the fluid or pasty core. Also, it is preferred that the concentrate does not consist of a solid envelope material covering core.

Fats and/or oils may be used as an ingredient in the gel phase according to the present invention. They may contribute to flavour and/or mouthfeel. Due to the aqueous nature of the concentrates, such fat is preferably present in an emulsified form. Use of emulsifers and/or stabilisers may be desired. Hence, it is preferred that the concentrate according to the present invention further comprises 1-30% (weight on total packaged concentrate) of emulsfied oil and/or fat.

### The concentrate

The concentrate preferably is a packaged concentrate for preparing a bouillon, broth, soup, sauce, gravy or for use as a seasoning.

The food concentrate is preferably in the form of a cube, a tablet, a granule, or a powder. It is more preferably a cube or a tablet, most preferably a pressed cube or tablet. A cube or tablet is preferably between 2 and 30 grams, preferably of between 3 and 20 grams, more preferably of between 4 and 12 grams. A cube and tablet are terms used in this description inter-exchangeable, as common in the field, and do not refer necessarily to geometrically defined structures. It can be preferred however that the cube is a regular figure wherein height, width and height have the same size. It can be preferred that the tablet is an oblong wherein the longest dimension (length) and the second-longest dimension (width) 1:1 to 1:3, preferably of between 1:1 to 1:2. The longest dimension (length) and the shortest dimension (height) preferably relate to each other as 1:2 to 1:6.

The food concentrate is preferably a concentrate selected from the group consisting of a bouillon concentrate, a soup concentrate, a gravy concentrate, a sauce concentrate and a seasoning concentrate.

### Hardness

The hardness of the cube is preferably less than 350kPa, preferably not more than 300kPa, still more preferably not more than 250kPa, even more preferably not more than 200kPa, or even less than 150kPa; but preferably more than 10kPa, more preferably more than 20kPa, still more preferably more than 30kPa, or even more than 50kPa.

The hardness of bouillon cubes is preferably measured using a Texture analyser equipped with a cylindrical probe having a diameter of ½ inch. A bouillon cube (dimensions 11,5 * 24 * 28 mm) is then positioned horizontally under the probe, with the centre of the cube in the horizontal plane coinciding with the centre of the probe. The cube is compressed by lowering the probe at a constant speed of 0.5 mm/s over a distance of 3mm after touching the top surface. During compression, the force experience by the probe is measured. The hardness is defined as the maximum pressure that is encountered divided by the surface of the probe in touch with the cube.

### Dissolution

Present day consumers prefer a food concentrate for preparing a bouillon, broth, soup, sauce, gravy or for use as a seasoning cube to dissolve fast into water or a dish.

It is preferred in the purview of the present invention that a cube of 12g has a dissolution time of less than 40s, preferably less than 35s, still more preferably less than 30 s in water of 92°C under stirring. One suitable method to measure the dissolution speed is given below.

The dissolution speed of the cubes is measured by a dynamic conductivity measurement. A portion of 1 L demineralised water in a 2 L glass beaker with a diameter of 12.7cm is brought at a temperature of 92 +/- 1°C and one cube (12 g) is dissolved under continuous stirring using a triangular stirring bar with a length of 8 cm at a constant stirring speed of 170 rpm . The conductivity of the water is monitored in time using a Mettler Toledo Seven Compact conductivity meter. The Conductivity rises due to dissolution of the salts from the formulation into the water, until all salt is dissolved and a maximum is reached. The dissolution time is defined as the time at which the conductivity has reached 90% of the final plateau conductivity value. Measurements are carried out in threefold.

### Process for preparing the food concentrate

In a second aspect, the present invention provides a method for preparation of a composition according to the invention, comprising the following steps:

### Preparing the solid matrix

A solid matrix may be produced by adding dry ingredients into a mixer (for example of the type ZZ-mixer, Plough-shear mixer, Hobart or Kenwood Chef kitchen blender, equipped with a K-beater type of stirring geometry). This dry mix is then mixed until fully homogeneous. Subsequently, water or liquid may be added and mixed until the liquid is fully mixed into the dry ingredients. Hereafter, the fats (if any) may be added in different forms, including molten format, granulated format, paste format ("spaghetti fat") resulting into a homogeneous pasty substance. The order of addition mentioned above is only an example and variations in this order may be varied by the person skilled in the art.

### Preparing the gel phase

The gel phase can be prepared by dissolving the gelling agent or combination of gelling agents of choice in water at a temperature above the gelation point of the gelling agent(s). Subsequently salt is added and the mixing is continued. The gels are set by cooling and/or ageing. The order of addition mentioned above is only an example and variations in this order may be made by the person skilled in the art.

### Comminuting the gel phase

In this step the gel phase is made into discrete particulates using any suitable method to prepare particles from gels. Preferably, the gel particulates in this step have a volume weighted average diameter ranging from 50 micrometer to 5 millimeter, preferably from 100 micrometer to 1 millimeter, preferably from 100 micrometer to 500 micrometer. The size of these particulates will influence the size of the gel inclusions. The particulates can be prepared for example using a mixer, blender, cutter or meat grinder device that cuts the hydrogel in small pieces. Using this type of technology, the hydrogel particulates may have a variety of shapes. Optionally the hydrogel particulates may be sieved in order to remove any particulates above a determined size. The volume based particle size equals the diameter of a sphere that has the same volume as a given particle.

### Mixing the solid matrix and the gel phase

In this step the gel phase particulates are dispersed into the solid matrix. The mixture of edible fat and inorganic salt is mixed with the gel particulates, such that a dispersion of particulates is formed in the solid matrix. The hydrogel particles play the role of the template around which the solid matrix solidifies. Preferably, in this step the volume ratio of the solid matrix composition and the gel phase ranges from 65:35 to 92.5:7.5, preferably from 67.5:32.5 to 90:10, preferably from 70:30 to 87.5:12.5.

### Extruding/Pressing/etc into a cube

In this step the dispersion of particulates of the gel phase hydrogel in the solid matrix, is preferably cooled. Without wishing to be bound by a theory, it is thought that cooling leads to solidification, therewith giving the composition its structure, by a continuous fat-salt mixture/structure around the hydrogel particles.

Accordingly, the paste is preferably charged into a filling hopper of an extruder/packaging device (for example of Corazza or Benhil type). Here, the paste is extruded through one or multiple dies which is aimed at portioning the paste into cubes with a weight preferably between 2 and 30 grams, preferably of between 3 and 20 grams, more preferably of between 4 and 12 grams. The cube portions are then packed into a wrapping foil at the packaging part of the extruder. The wrapped cubes are then collected and optionally packaged in a secondary and possibly a tertiary packaging of choice.

### Preparing food

In a third aspect the invention provides use of a composition according to the first aspect of the invention as a bouillon cube. The compositions of the invention may be used in any common way as the consumer is used to with a conventional bouillon cube.

### Examples

The invention will now be illustrated by means of the following non-limiting examples

### Methods

### Hardness measurement

The hardness of bouillon cubes was measured using a Texture analyser (TA XT Plus ex Stable Microsystems) equipped with a cylindrical probe having a diameter of ½ inch. A bouillon cube (dimensions 11,5 * 24 * 28 mm) was positioned horizontally under the probe, with the centre of the cube in the horizontal plane coinciding with the centre of the probe. The cube was compressed by lowering the probe at a constant speed of 0.5 mm/s over a distance of 3mm after touching the top surface. During compression, the force experienced by the probe is measured. The hardness is defined as the maximum pressure that is encountered divided by the surface of the probe in touch with the cube. Measurements are carried out tenfold.

### Dissolution time

The dissolution speed of the cubes is measured by a dynamic conductivity measurement. A portion of 1 l demineralised water in a 2 liter beaker glass with a diameter of 12.7cm is brought at a temperature of 92 +/- 1 °C and one cube is dissolved under continuous stirring using a triangular stirring bar with a length of 8 cm at a constant stirring speed of 170 rpm . The conductivity of the water is monitored in time using a Mettler Toledo Seven Compact conductivity meter. The Conductivity rises due to dissolution of the salts from the formulation into the water, until all salt is dissolved and a maximum is reached. The dissolution time is defined as the time at which the conductivity has reached 90% of the final plateau conductivity value. Measurements are carried out in threefold.

### Water activity

Water activity was determined using a Aqualab Lite device. A portion of the Bouilon tablet or gel particles was crushed and divided on a plastic cup, brought into the device and the water activity was measured in quadruplo.

### Example 1

A set of beef bouillon pastes with gel inclusions was prepared by combining a conventional paste matrix and a slurry of gel beads. The production of these separate blends was described below:
The gel beads slurry was prepared by dissolving 3wt% κ-Carrageenan in water at a temperature of 90°C, followed by pouring the gel into plastic tubes of 50 ml. The gels were cooled down and then transferred into a meat mincer add-on of the Kenwood kitchen Mixer. The mincer was equipped with a 2 mm mesh size die and a cutter before the mesh. The gels were passed through the meat mincer 3 times, yielding a slurry of visible gel beads with a size of approximately 1-2 mm in diameter.

The pastes were produced by adding dry ingredients (listed in table paste formulation) into a bowl of a Kenwood Chef kitchen blender, equipped with a K-beater type of stirring geometry. This dry mix was then mixed at low speed (setting 3) until fully homogeneous. In the next step, liquid yeast extract was added and the recipe was mixed for another two minutes until the liquid was fully divided over the dry ingredients. Hereafter, the fats were added in molten form at a temperature of 80°C and the resulting paste was mixed for another 3 minutes. This paste will serve as the comparative reference without any inclusions.

**Table 1: Formulation breakdown of the paste fraction describes in example 1**

| **Ingredient** | **Weight percentatge (wt%)** |
|---|---|
| Salt Evaporated Non Iodized 25kg Bag | 48.6 |
| Monosodiumglutamate Regular 24-60m bulk | 18.7 |
| Oil | 20.5 |
| Sugar | 1.3 |
| Taste imparting components | 10.9 |

In a similar manner more pastes were produced. To these pastes, gel slurry was added during continuous stirring at low speed (setting 3) until volume percentages of 10%, 20% and 40% were reached. Subsequently, tablets were prepared form the paste by adding required amounts of paste to fill 24 x 28mm compartiments of a mould and shaping the paste by pushing rectangular pistons to a final tablet height of 11.5+/-0.3 mm.
It was observed from visual and manual assessment that cubes containing from 10 up to 40Vol% of gel beads appear more moisty and meaty than the reference and showed a desired softening of the cube. The pastes containing 40 Vol% of gel beads appeared too heterogeneous and were too soft, such that is would break with minimal handling force.
From the cubes made at 40vol% gel, also a portion of the cubes was dried at 40°C under vacuum for 3 days. Drying resulted into color loss of the cube, shrinkage and too much loss in coherence.
The dissolution characteristics and the hardness of the cubes were assessed and are given in the table 2.

**Table 2:**

| Vol% inclusions | Hardness (kPa) | a_{w} | Appearance |
|---|---|---|---|
| 0 | 361 +/- 23 | 0,51 | Normal dry, smooth |
| 10 (wet) | 147 +/- 18 | 0,65 | Moisty, meaty |
| 20 (wet) | 82 +/- 1.8 | 0,69 | Moisty, meaty |
| 40 (wet) | 16 +/- 3.1 | 0,72 | Moisty, meaty |
| 40 (dry)* | 10 +/- 5.3 | 0,29 | Pale, dry, grainy |

| | | | |
|---|---|---|---|
| *comparative | | | |

The results show that the hardness of cubes that comprise gel particles have a better hardness than the comparative example according to WO2014/095196 and provide a moisty and meaty appearance to the cube while the inclusion of the gel beads in all cases accelerates cube dissolution.

In conclusion, wet cubes with inclusions provide best improvement in dissolution time and the suitable decrease in hardness and best appearance.

### Example 2

Packaged beef bouillon cubes were prepared by combining a conventional paste matrix comprising starch and a slurry of gel beads until a volume fraction of 11%. The gel beads slurry (formulation, see table 3) was prepared by dissolving 3wt% Xanthan and Locust bean gum at a 1:1 ratio in water at a temperature of 85°C for half an hour using a Thermomix device. Subsequently salt was added and the mix stirred for another 30 minutes. The gels were cooled down, cut into blocks and then transferred into a meat mincer add-on of the Kenwood kitchen Mixer. The mincer was equipped with a 2 mm mesh size die and a cutter before the mesh. The gels were passed through the meat mincer 3 times, yielding a slurry of visible gel beads with a size of approximately 1-2 mm in diameter.

**Table 3**

| | weight percentage (wt%) |
|---|---|
| Water | 72 |
| Xanthan | 1,5 |
| LBG | 1,5 |
| salt | 25 |

A portion of 8kg of Bouillon paste was produced by adding dry ingredients (listed in table paste formulation) into a bowl of a Hobart Mixer equipped with a blade stirrer. This dry mix was then mixed at low speed until fully homogeneous. In the next step, water was added and the recipe was mixed for another two minutes until the water was fully divided over the dry ingredients. Hereafter, the fats were added in molten form at a temperature of 80°C and the resulting paste was mixed for another 3 minutes.

**Table 4**

| **Description** | **Weight Percentage** |
|---|---|
| SALT (EVAPORATED) 25 KG BAGS | 37 |
| GLUTAMATE E 621, 32 MESH, BULK | 12 |
| Oil | 25.8 |
| Potato Starch, Native, 8 % Moisture | 11.7 |
| Taste imparting components | 11.5 |
| SUGAR | 3.2 |

To these paste,1 kg of gel slurry was added during continuous stirring at low speed for 15 s, resulting into a homogenous mix with a volume percentage of 11% gel particles. The Paste was transferred to a Corazza FD12 type of Extruder and was extrudes into cubes and packaged into wrapper foil.
After hardening for 2 days, a set of cubes was separated and dried under 0,1 bar Pressure at 40°C for 3 days. One week after preparation, the cubes were inspected visually and manually and the hardness, dissolution time, and water activity were measured. The results are collected in table 5.

**Table 5**

| Vol% inclusions | Dissolution time (s) | Hardness (kPa) | a_{w} | Appearance |
|---|---|---|---|---|
| 11 (wet) | 23 +/- 1.2 | 104 +/- 9.3 | 0.67 +/- 0.01 | Moisty, meaty |
| 11 (dry)* | 71 +/-2.1 | 390 +/- 46 | 0.33 +/- 0.01 | Hard, brittle |

| | | | | |
|---|---|---|---|---|
| *comparative | | | | |

It is concluded that the non-dried version of the cubes have lower dissolution time and higher hardness and more moist appearance, indicating that formulation at high a_{w} have preferred properties.

### Example 3

A set of bouillon paste with gel inclusions was prepared by combining a conventional paste matrix and a slurry of gel beads. The production of these separate blends was described below:
The gel beads slurry (formulation, see table 3) was prepared by dissolving 3wt% Xanthan and Locust bean gum at a 1:1 ratio in water at a temperature of 85°C for half an hour using a Thermomix device. Subsequently salt was added and the mix stirred for another 30 minutes. The gels were cooled down, cut into blocks and then transferred into a meat mincer add-on of the Kenwood kitchen Mixer. The mincer was equipped with a 2 mm mesh size die and a cutter before the mesh. The gels were passed through the meat mincer 3 times, yielding a slurry of visible gel beads with a size of approximately 1-2 mm in diameter.

**Table 6**

| | weight percentage (wt%) |
|---|---|
| Water | 72 |
| Xanthan | 1,5 |
| LBG | 1,5 |
| salt | 25 |

The pastes were produced by adding dry ingredients (listed in table paste formulation) into a bowl of a Kenwood Chef kitchen blender, equipped with a K-beater type of stirring geometry. This dry mix was then mixed at low speed (setting 3) until fully homogeneous. In the next step, liquid yeast extract was added and the recipe was mixed for another two minutes until the liquid was fully divided over the dry ingredients. Hereafter, the fats were added in molten form at a temperature of 80°C and the resulting paste was mixed for another 3 minutes. This paste will serve as the comparative reference without any inclusions.

**Table 7**

| description | % |
|---|---|
| Salt Evaporated Non Iodized 25kg Bag | 42,1 |
| Monosodiumglutamate Regular 24-60m bulk | 15,0 |
| F&O Palm oil frac dfPOs IV36 | 19,3 |
| Potato Starch, Native, 8 % Moisture | 9,3 |
| Sugar (white), crystal sugar (KF), BB | 2,0 |
| Taste imparting components | 12.3 |

In a similar manner more pastes were produced. To these pastes, gel slurry was added during continuous stirring at low speed (setting 3) until volume percentages of 5 %, 10%, 20% and 30% were reached. Subsequently, tablets were prepared form the paste by adding required amounts of paste to fill 24 x 28mm compartiments of a mould and shaping the paste by pushing rectangular pistons to a final tablet height of 11.5+/-0.3 mm.

It was observed from visual and manual assessment that cubes containing 10 up to 30 Vol% of gel beads appear more moisty and meaty than the reference and showed a desired softening of the cube. The dissolution characteristics and the hardness of the cubes were assessed and are given in the table below.

**Table 8: Formulation breakdown of the paste fraction described in example 3**

| Vol% inclusions | Dissolution time (s) | Hardness (kPa) | aw | Appearance |
|---|---|---|---|---|
| 5 (wet)* | 42 +/-1 | 362 +/- 15 | 0.65 | Soft |
| 5 (dry)* | 59 +/- 2 | 1020 +/- 83 | 0.25 | Hard, tough |
| 10 (wet) | 33 +/-4 | 181 +/-16 | 0.66 | Soft, crumbly, visible pieces |
| 10 (dry)* | 70 +/-3 | 581 +/- 80 | 0.36 | Hard, tough |
| 20 (wet) | 22 +/- 3 | 81 +/- 12 | 0.70 | Soft, crumbly, visible pieces |
| 20 (dry)* | 64 +/- 4 | 542 +/- 80 | 0.39 | Hard, brittle |
| 30 (wet) | 21 +/-2 | 79 +/- 9 | 0.72 | Soft, crumbly, visible pieces |
| 30 (dry)* | 70 +/- 3 | 605 +/- 98 | 0.33 | Hard, brittle |

| | | | | |
|---|---|---|---|---|
| *comparative | | | | |

In a similar manner more pastes were produced. To these pastes, gel slurry was added during continuous stirring at low speed (setting 3) until volume percentages of 10%, 20% and 40% were reached.

It was observed from visual and manual assessment that cubes containing 10 up to 40 Vol% of gel beads appear more moisty and meaty than the reference and showed a desired softening of the cube.

### Example 4

Packaged beef bouillon cubes were prepared by combining a conventional paste matrix comprising starch and a slurry of gel beads until volume fractions of 20 and 30%.
The gel beads slurry (formulation, see table 9) was prepared by premixing all dry ingredients and dissolving all in water at a temperature of at least 90°C for three minutes using a Unimix device (Ekato systems). The gels were cooled down, cut into blocks and then transferred into a meat mincer. The mincer was equipped with a 3 mm mesh size die and a cutter before the mesh. The gel blocks were passed through the meat mincer once. This yielded visible gel beads with a size of approximately 3 mm in diameter, hereafter referred to as gel particles.

**Table 9**

| | weight percentage (wt%) |
|---|---|
| Water | 63 |
| agar | 2 |
| salt | 21 |
| sugar | 7 |
| MSG | 7 |

Three portions of 10kg of Bouillon paste were produced by adding dry ingredients (listed in table paste formulation) into a bowl of a Hobart Mixer equipped with a blade stirrer. This dry mix was then mixed at low speed until fully homogeneous. In the next step, gel particles or water was added and the recipe was mixed for another two minutes until the water was fully divided over the dry ingredients. Hereafter, the fats were added in molten form at a temperature of 70°C and the resulting paste was mixed for another minute.

**Table 10: paste formulation**

| | **GP01** | **GP03** | Reference |
|---|---|---|---|
| SALT (EVAPORATED) 25 KG BAGS | 3,120 | 2,776 | 3,7 |
| GLUTAMATE E 621, 32 MESH, BULK | 1,012 | 0,900 | 1,2 |
| Dry Mix | 0,970 | 0,863 | 1,17 |
| POTATO STARCH, NATIVE, MOISTURE 9%, BB | 0,987 | 0,878 | 1,15 |
| Palm oil, Stearin, Bulk SAV1044556 | 1,518 | 1,351 | 1,8 |
| F&O MIX PO/SH/SL | 0,658 | 0,585 | 0,78 |
| Agar particles | 1,736 | 2,647 | 0,2 |

The Paste was transferred to a Corazza FD220 type of Extruder and was extruded into cubes and packaged into wrapper foil.
One week after preparation, the cubes were inspected visually and manually and the hardness, dissolution time, and water activity were measured. The results are collected in table 11.

**Table 11**

| Vol% inclusions | Dissolution time (s) | Hardness (kPa) | a_{w} | Appearance |
|---|---|---|---|---|
| 20 | 17.6 ± 0.7 | 171 ± 2.9 | 0.68 | Moist with visible inclusions |
| 30 | 14.8 ± 1.1 | 88.7 ± 1.1 | 0.69 | Moist with visible inclusions |
| 0 | 21.3 ± 1.7 | 147 ± 2.6 | 0.56 | Dry, plain |

| | | | | |
|---|---|---|---|---|
| *comparative | | | | |

It was concluded that the cubes with gel pieces and at high a_{w} have lower dissolution time and visual inclusions.

### Example 5

Packaged beef bouillon cubes were prepared by combining a conventional paste matrix comprising starch and a slurry of gel beads until a volume fractions of 20%. The gel beads slurry (formulation, see table 12) was prepared by premixing all dry ingredients and dissolving all in water at a temperature of at least 90°C for three minutes using a scanima device. The gels were cooled down, cut into blocks and then transferred into an Urschell cutting device, with a target of 3 mm size. The gel blocks were passed through the meat mincer once. This yielded visible gel beads with a size of approximately 3 mm in diameter, hereafter referred to as gel particles.

**Table 12**

| | weight percentage (wt%) |
|---|---|
| Water | 72 |
| agar | 4 |
| salt | 24 |
| sugar | 7 |
| MSG | 7 |

A portions of 85kg of Bouillon paste was produced by adding dry ingredients (listed in table paste formulation) into a Double Helix mixer (Amixon, Germany). This dry mix was then mixed at low speed until fully homogeneous. In parallel, the required portion of solid fat was solidified into cylindrical blocks and extruded into soft strands with a diameter of 2mm using a press with 2 mm holes at the end. In the next step, the extruded fat was added to the dry materials and mixed for 3 minutes, including activation of blade choppers in the mixer. In the final step, gel pieces were added and mixed for one additional minute with blade choppers deactivated.

**Table 13: paste formulation**

| | **GP01** |
|---|---|
| | |
| SALT (EVAPORATED) 25 KG BAGS | 3,120 |
| GLUTAMATE E 621, 32 MESH, BULK | 1,012 |
| Dry Mix | 0,970 |
| POTATO STARCH, NATIVE, MOISTURE 9%, BB | 0,987 |
| Palm oil, Stearin, Bulk SAV1044556 | 1,518 |
| F&O MIX PO/SH/SL | 0,658 |
| Agar particles | 1,736 |

The Paste was transferred to a Corazza FD220 type of Extruder and was extruded into cubes and packaged into wrapper foil. One week after preparation, the cubes were inspected visually and manually and the visibility of the gel pieces was maintained.

## Claims

1. A food concentrate comprising:
a 65-92.5% by volume of the total concentrate of a solid matrix; and
b 7.5-35% by volume of the total concentrate of a gel phase;
wherein the gel phase is in the form of particles embedded into the solid matrix;
and **characterized in that**:
- the gel particles have an average particle size of 200-5000 µm; and
- the water activity of the food concentrate is between 0.55 and 0.75; and
- the food concentrate having a hardness of less than 350kPa

2. A food concentrate according to claim 1, wherein the solid matrix comprises:
a 10-70% by weigh of the solid matrix of salt
b 0-45% by weight of glutamate
c 1-60% by weight of the solid matrix of taste imparting components
d Filler

3. A food concentrate according to anyone of claims 1 or 2, wherein the gel phase comprises:
a 0.1-10% by weigh based on water in the gel phase of a salt tolerant gelling system
b 5-30% by weigh based on water in the gel phase of salt
c 1-60% by weigh of the gel phase of taste imparting components, wherein the taste-imparting components comprise one or more of liquid or dissolvable extracts or concentrates of one or more of meat, fish, herbs, fruit or vegetables, and/or flavours, and/or yeast extract, and/or hydrolysed protein of vegetable-, soy-, fish-, or meat origin and/or herbs, vegetables, fruits, meat, fish, crustaceans, or particulates thereof, said the particulates having an average particle size of 100 to 2000 µm.

4. A food concentrate according to anyone of the preceding claims, wherein the food concentrate has a hardness of less than 350kPa.

5. A food concentrate according to any of the preceding claims, wherein the internal cross-sectional diameter of the gel particles ranges from 50 micrometer to 5 millimeter, preferably from 100 micrometer to 3 millimeter, preferably from 100 micrometer to 2 millimeter.

6. A food concentrate according to anyone of the preceding claims having a hardness of between 10kPa and 350kPa, preferably between 20kPa and 300kPa.

7. A method for preparation of a composition according to anyone of the preceding claims, comprising the following steps:
a preparing the solid matrix by mixing the ingredients of the solid matrix,
b preparing the gel phase by mixing one or more gelling agents with water or liquid water based taste imparting ingredients and salt,
c comminuting the gel particles to a size of 50 micrometer to 5 millimeter,
d mixing the gel particles with the solid matrix,
e Extruding or pressing the food concentrate into cubes or tablets.

8. A method according to claim 7, wherein in step b) the concentration of the gelling system ranges from 1% to 10% based on the weight of the gel phase.

9. A method according to any of claims 7 or 8, wherein in step d) the volume ratio of the composition from step a) and the composition from step c) ranges from 65:35 to 92.5:7.5, preferably from 67.5:32.5 to 90:10, preferably from 70:30 to 87.5:12.5.

10. Use of a composition according to any of claims 1 to 6 as a bouillon cube.

## Patentansprüche

1. Lebensmittelkonzentrat, umfassend:
a 65-92,5 Volumen-% des gesamten Konzentrats an einer festen Matrix und
b 7,5-35 Volumen-% des gesamten Konzentrats an einer Gelphase,
wobei die Gelphase in Form von in der festen Matrix eingebetteten Partikeln vorliegt; und
**dadurch gekennzeichnet, dass**:
- die Gelpartikel eine durchschnittliche Partikelgröße von 200-5000 µm aufweisen und
- die Wasseraktivität des Lebensmittelkonzentrats zwischen 0,55 und 0,75 liegt und
- das Lebensmittelkonzentrat eine Härte von weniger als 350 kPa aufweist.

2. Lebensmittelkonzentrat nach Anspruch 1, wobei die feste Matrix umfasst:
a 10-70 Gewichts-% der festen Matrix an Salz
b 0 bis 45 Gewichts-% Glutamat
c 1-60 Gewichts-% der festen Matrix an geschmacksgebenden Komponenten
d Füllstoff.

3. Lebensmittelkonzentrat nach irgendeinem der Ansprüche 1 oder 2, wobei die Gelphase umfasst:
a 0.1-10 Gewichts-%, bezogen auf Wasser in der Gelphase, an einem salztoleranten Geliersystem
b 5-30 Gewichts-%, bezogen auf das Wasser in der Gelphase, an Salz
c 1-60 Gewichts-% der Gelphase an geschmacksgebenden Komponenten,
wobei die geschmacksgebenden Komponenten ein oder mehrere flüssige oder lösbare Extrakte oder Konzentrate von einem oder mehreren von Fleisch, Fisch, Kräutern, Früchten oder Gemüse und/oder Aromen und/oder Hefeextrakt und/oder hydrolysiertem Protein von Pflanzen-, Soja-, Fisch- oder Fleisch-Ursprung und/oder Kräutern, Gemüse, Früchten, Fleisch, Fisch, Krustentieren oder Partikel davon umfassen, wobei die Partikel eine durchschnittliche Partikelgröße von 100 bis 2000 µm aufweisen.

4. Lebensmittelkonzentrat nach irgendeinem der vorhergehenden Ansprüche, wobei das Lebensmittelkonzentrat eine Härte von weniger als 350 kPa aufweist.

5. Lebensmittelkonzentrat nach einem der vorhergehenden Ansprüche, wobei der innere Querschnittsdurchmesser der Gelpartikel von 50 Mikrometern bis 5 Millimetern, vorzugsweise von 100 Mikrometern bis 3 Millimetern, vorzugsweise von 100 Mikrometern bis 2 Millimetern, reicht.

6. Lebensmittelkonzentrat nach irgendeinem der vorhergehenden Ansprüche, das eine Härte zwischen 10 kPa und 350 kPa, vorzugsweise zwischen 20 kPa und 300 kPa, aufweist.

7. Verfahren zur Herstellung einer Zusammensetzung nach irgendeinem der vorhergehenden Ansprüche, umfassend die folgenden Schritte:
a Herstellen der festen Matrix durch Mischen der Zutaten der festen Matrix,
b Herstellen der Gelphase durch Mischen eines oder mehrerer Geliermittel(s) mit Wasser oder auf Wasser basierenden flüssigen geschmacksgebenden Zutaten und Salz,
c Zerkleinern der Gelpartikel auf eine Größe von 50 Mikrometern bis 5 Millimetern,
d Mischen der Gelpartikel mit der festen Matrix,
e Extrudieren oder Pressen des Lebensmittelkonzentrats zu Würfeln oder Tabletten.

8. Verfahren nach Anspruch 7, wobei im Schritt b) die Konzentration des Geliersystems von 1% bis 10%, bezogen auf das Gewicht der Gelphase, beträgt.

9. Verfahren nach einem der Ansprüche 7 oder 8, wobei im Schritt d) das Volumenverhältnis der Zusammensetzung von Schritt a) und der Zusammensetzung von Schritt c) von 65:35 bis 92,5:7,5, vorzugsweise von 67,5:32,5 bis 90:10, vorzugsweise von 70:30 bis 87,5:12,5, beträgt.

10. Verwendung einer Zusammensetzung nach einem der Ansprüche 1 bis 6 als Brühwürfel.

## Revendications

1. Concentré alimentaire comprenant :
a 65-92,5 % en volume du concentré total d'une matrice solide ; et
b 7,5-35 % en volume du concentré total d'une phase de gel ;
où la phase de gel est dans la forme de particules incorporées dans la matrice solide ;
et **caractérisé en ce que** :
- les particules de gel présentent une taille moyenne de particule de 200-5 000 µm ; et
- l'activité d'eau du concentré alimentaire est de 0,55 à 0,75 ; et
- le concentré alimentaire a une dureté inférieure à 350 kPa.

2. Concentré alimentaire selon la revendication 1, où la matrice solide comprend :
a 10-70 % en masse de la matrice solide de sel
b 0-45 % en masse de glutamate
c 1-60 % en masse de la matrice solide de constituants communiquant du goût
d une charge

3. Concentré alimentaire selon l'une quelconque des revendications 1 ou 2, où la phase de gel comprend :
a 0,1-10 % en masse sur la base d'eau dans la phase de gel d'un système gélifiant tolérant le sel
b 5-30 % en masse sur la base d'eau dans la phase de gel de sel
c 1-60 % en masse de la phase de gel de constituants communiquant du goût, où les constituants communiquant du goût comprennent un ou plusieurs extraits ou concentrés liquides ou pouvant être dissous d'un ou plusieurs parmi la viande, le poisson, les herbes, les fruits ou légumes, et/ou des arômes, et/ou un extrait de levure, et/ou une protéine hydrolysée d'origine végétale, de soja, de poisson, ou de viande et/ou des herbes, des légumes, des fruits, de la viande, du poisson, des crustacés, ou des matières particulières de ceux-ci, lesdites matières particulaires ayant une taille moyenne de particule de 100 à 2 000 µm.

4. Concentré alimentaire selon l'une quelconque des revendications précédentes, où le concentré alimentaire présente une dureté inférieure à 350 kPa.

5. Concentré alimentaire selon l'une quelconque des revendications précédentes, où le diamètre transversal interne des particules de gel est de 50 micromètres à 5 millimètres, de préférence de 100 micromètres à 3 millimètres, encore mieux de 100 micromètres à 2 millimètres.

6. Concentré alimentaire selon l'une quelconque des revendications précédentes ayant une dureté de 10 kPa à 350 kPa, de préférence de 20 kPa à 300 kPa.

7. Procédé de préparation d'une composition selon l'une quelconque des revendications précédentes, comprenant les étapes suivantes :
a préparation de la matrice solide par mélange des ingrédients de la matrice solide,
b préparation de la phase de gel par mélange d'un ou plusieurs agents gélifiants avec de l'eau ou d'ingrédients communiquant du goût liquides à base d'eau et de sel,
c broyage des particules de gel jusqu'à une taille de 50 micromètres à 5 millimètres,
d mélange des particules de gel avec la matrice solide,
e extrusion ou compression du concentré alimentaire en cubes ou comprimés.

8. Procédé selon la revendication 7, où dans l'étape b) la concentration du système gélifiant est de 1 % à 10 % rapportée à la masse de la phase de gel.

9. Procédé selon l'une quelconque des revendications 7 ou 8, où dans l'étape d) le rapport en volume de la composition de l'étape a) et de la composition de l'étape c) est de 65:35 à 92,5:7,5, de préférence de 67,5:32,5 à 90:10, de préférence de 70:30 à 87,5:12,5.

10. Utilisation d'une composition selon l'une quelconque des revendications 1 à 6 comme un cube de bouillon.
